# EUROPEAN PATENT APPLICATION

(11) **EP 4 738 860 A1**
(43) Date of publication of application: **06.05.2026**
(21) Application number: 24831404.9
(22) Date of filing: 02.05.2024
(51) Int. Cl.: H04N 23/60, G03B 15/00, G03B 17/56, G06T 7/60, G06T 7/246, H04N 23/611

(54) **IMAGING CONTROL DEVICE, IMAGING CONTROL SYSTEM, IMAGING CONTROL METHOD, AND PROGRAM**

(30) Priority: 28.06.2023 JP 2023105988
(71) Applicant: NIKON CORPORATION, Tokyo 140-8601 (JP)
(72) Inventor: FUJINAWA Nobuhiro, Tokyo 108-6290 (JP); TAKESHITA Tetsuya, Tokyo 108-6290 (JP)
(74) Representative: Hoffmann Eitle
(86) International application number: PCT/JP2024/016860
(87) International publication number: WO 2025/004531

(57) **Abstract**

An imaging control device includes an acquisition unit configured to acquire a positional relationship between a first object and a second object and a control unit configured to control imaging of at least one of the first object and the second object that is performed by an imaging device. The control unit controls imaging performed by the imaging device when the positional relationship acquired by the acquisition unit satisfies a predetermined imaging condition.

## Description

### TECHNICAL FIELD

The present invention relates to an imaging control device, an imaging control system, an imaging control method, and a program.

Priority is claimed on Japanese Patent Application No. 2023-105988, filed June 28, 2023, the content of which is incorporated herein by reference.

### BACKGROUND ART

Imaging of sports scenes has been performed by cameramen. On the other hand, automation of imaging of sports scenes has progressed. For example, a technique of simultaneously instructing imaging by remotely interlinking a plurality of cameras is known. A system that broadcasts a soccer field while automatically changing an angle of view and a zoom magnification has been proposed. An imaging device having a function of causing an angle of view to track a designated subject is known (Patent Document 1).

### Citation List

### Patent Document

Patent Document 1: Japanese Unexamined Patent Application, First Publication No. 2021-100239

### SUMMARY OF INVENTION

According to an aspect of the present invention, there is provided an imaging control device including an acquisition unit configured to acquire a positional relationship between a first object and a second object and a control unit configured to control imaging of at least one of the first object and the second object that is performed by an imaging device, wherein the control unit controls imaging performed by the imaging device when the positional relationship acquired by the acquisition unit satisfies a predetermined imaging condition.

According to another aspect of the present invention, there is provided an imaging control system including the imaging control device and an imaging device that is controlled by the imaging control device.

According to another aspect of the present invention, there is provided an imaging control method including an acquisition step of acquiring a positional relationship between a first object and a second object and a control step of controlling imaging of at least one of the first object and the second object that is performed by an imaging device, wherein the control step includes controlling imaging performed by the imaging device when the positional relationship acquired in the acquisition step satisfies a predetermined imaging condition.

According to another aspect of the present invention, there is provided a program causing a computer to perform an acquisition step of acquiring a positional relationship between a first object and a second object and a control step of controlling imaging of at least one of the first object and the second object that is performed by an imaging device, wherein the control step includes controlling imaging performed by the imaging device when the positional relationship acquired in the acquisition step satisfies a predetermined imaging condition.

### BRIEF DESCRIPTION OF DRAWINGS

[FIG. 1] A diagram illustrating an example of a configuration of an imaging control system 1 according to a first embodiment.
[FIG. 2] A diagram illustrating an example of a functional configuration of an imaging control device 2 according to the first embodiment.
[FIG. 3] A diagram illustrating an example of a functional configuration of an imaging device 3 according to the first embodiment.
[FIG. 4] A diagram illustrating an example of imaging conditions according to the first embodiment.
[FIG. 5] A diagram illustrating an example of imaging conditions according to the first embodiment.
[FIG. 6] A diagram illustrating an example of a control flow that is performed at the time of start of imaging by the imaging control system 1 according to the first embodiment.
[FIG. 7] A diagram illustrating an example of a control flow that is performed at the time of end of imaging by the imaging control system 1 according to the first embodiment.
[FIG. 8] A diagram illustrating another example of imaging conditions according to a modified example of the first embodiment.
[FIG. 9] A diagram illustrating an example of a functional configuration of an imaging control system 1a according to a second embodiment.
[FIG. 10] A diagram illustrating an example of a functional configuration of an imaging device 3a according to the second embodiment.
[FIG. 11] A diagram illustrating an example of a control flow that is performed at the time of start of imaging by the imaging control system 1a according to the second embodiment.
[FIG. 12] A diagram illustrating another example of a control flow that is performed at the time of start of imaging by the imaging control system 1a according to a modified example of the second embodiment.

### DESCRIPTION OF EMBODIMENTS

### (First embodiment)

Hereinafter, a first embodiment will be described in detail with reference to the accompanying drawings.

### [Configuration of imaging control system 1]

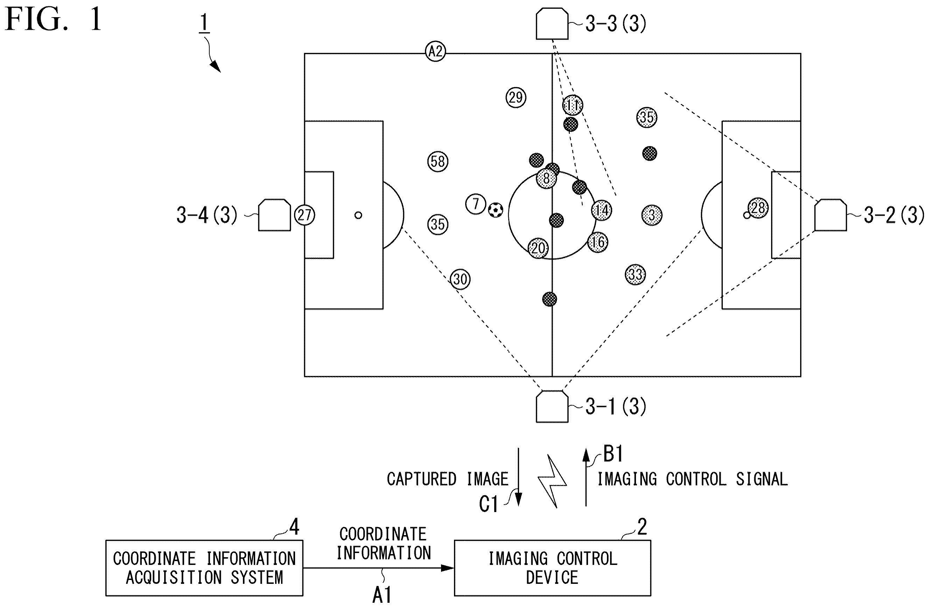

FIG. 1 is a diagram illustrating an example of a configuration of an imaging control system 1 according to the present embodiment. The imaging control system 1 includes an imaging control device 2, a plurality of imaging devices 3, and a coordinate information acquisition system 4. The plurality of imaging devices 3 include, for example, four imaging devices such as a first imaging device 3-1, a second imaging device 3-2, a third imaging device 3-3, and a fourth imaging device 3-4. In the following description, one of the plurality of imaging devices 3 is representatively referred to as an imaging device 3.

The imaging control system 1 is a system that automatically images a specific scene as continuous still images of a player who is interesting (who is also referred to as a player of interest) while playing a sport. In the present embodiment, the sport is, for example, soccer. A specific scene is a decisive scene or an attention-attracting scene in a soccer game such as a scene in which a goal is scored or a shooting scene.

The imaging control device 2 controls imaging of each of the plurality of imaging devices 3. The imaging control device 2 controls the imaging by transmitting an imaging control signal B1 to each of the plurality of imaging devices 3. That is, the imaging control device 2 controls imaging performed by each of the plurality of imaging devices 3 through remote control. The imaging control device 2 is, for example, a personal computer (PC). The imaging control device 2 may transmit an imaging control signal B1 to the imaging devices 3 in a wireless manner or transmit the imaging control signal B1 in a wired manner.

The imaging control device 2 acquires coordinate information A1 which is supplied from the coordinate information acquisition system 4. The imaging control device 2 calculates a positional relationship between a first object and a second object which are imaged by the imaging device 3 on the basis of the coordinate information A1. When the positional relationship satisfies a predetermined imaging condition, the imaging control device 2 controls imaging performed by each of the plurality of imaging devices 3. In the present embodiment, the first object is, for example, a player of interest. The second object is a ball. One of the first object and the second object may be a referee. The second object may be a fixed object. The fixed object is, for example, a goalpost or a white line indicating a penalty area.

The imaging device 3 images a sports scene. Each of the plurality of imaging devices 3 tracks and images a player of interest. In the present embodiment, for example, each of the plurality of imaging devices 3 tracks and images a common player of interest. The player of interest is determined in advance. The player of interest is, for example, a striker or a star player.

As described above, an imaging operation of the imaging device 3 is remotely controlled by imaging control device 2. The imaging operation which is performed by the imaging device 3 includes panning, tilting, and zooming. The imaging device 3 is, for example, a pan-tilt-zoom (PTZ) camera. The imaging device 3 may include a camera (for example, a mirrorless camera) and a platform which can be remotely controlled. In the present embodiment, for example, the imaging control device 2 controls imaging of each of the plurality of imaging devices 3 which are provided separately from the imaging control device 2. The imaging control device 2 and the imaging device 3 may be constituted as a unified device.

The imaging device 3 outputs a captured image C1 to the imaging control device 2. The imaging control device 2 displays a video (which is also referred to as a live view) in which the player of interest is automatically tracked by the imaging device 3. In the present embodiment, the captured image C1 includes a plurality of still images obtained by consecutively imaging a specific scene. The plurality of still images obtained by consecutively imaging the specific scene are images which are captured under the control of the imaging control device 2 when the positional relationship between the first object and the second object which are imaged by the imaging device 3 satisfies a predetermined imaging condition. Instead of outputting the captured image C1 to the imaging control device 2, the imaging device 3 may output the captured image C1 to a server which is communicatively connected thereto via a network.

The coordinate information acquisition system 4 acquires coordinate information A1 for each of one or more objects. The coordinate information A1 is information indicating coordinates of positions of the one or more objects. In the present embodiment, the coordinate information A1 of each of one or more players playing a sport is acquired. The coordinate information A1 includes information for identifying an object and information indicating coordinates of a position of the object in a pitch. The coordinates indicating the position in the pitch are expressed, for example, in a two-dimensional orthogonal coordinate system. The information for identifying an object is, for example, uniform numbers of players in each team.

The coordinate information acquisition system 4 is a tracking system including a camera and a server. The coordinate information acquisition system 4 acquires coordinate information A1 of each object from images captured by a plurality of cameras installed at positions at which the pitch can be imaged. For example, the cameras may include a ceiling camera attached to the ceiling of the pitch or a camera attached to a drone. The cameras may be a single device rather than multiple devices. The coordinate information acquisition system 4 calculates the coordinate information A1 for each object on the basis of image recognition of the images captured by the plurality of cameras. The coordinate information acquisition system 4 acquires the coordinate information A1 immediately (in real time) in a period in which the sport is being played. The plurality of cameras may be the imaging devices 3 or may be installed separately from the imaging devices 3.

When the imaging devices 3 are used as the cameras for acquiring the coordinate information A1, the imaging devices 3 acquire the coordinate information A1 on the basis of positions at which the imaging devices 3 are installed, directions in which the imaging devices 3 capture an image, and distance information on distance from the imaging devices 3 to an object.

The coordinate information acquisition system 4 may acquire a moving speed of an object, an acceleration of the object, and a moving direction of the object in addition to the coordinate information A1 from the captured images. In this case, the coordinate information A1 includes information indicating the moving speed of the object, information indicating the acceleration of the object, and information indicating the moving direction of the object in addition to information indicating coordinates thereof.

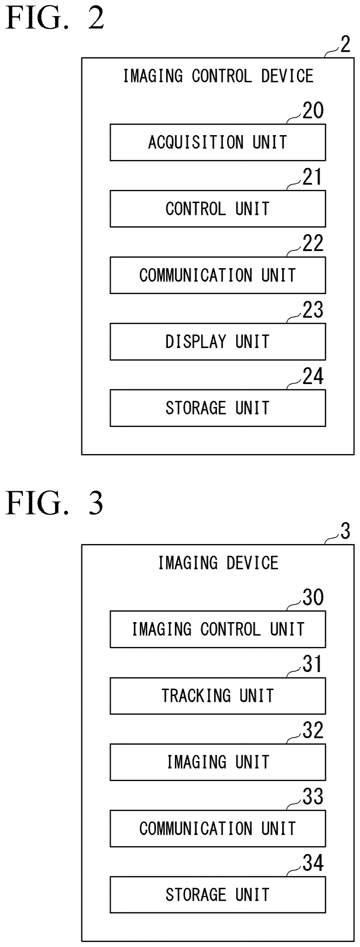

FIG. 2 is a diagram illustrating an example of a functional configuration of the imaging control device 2 according to the present embodiment. The imaging control device 2 includes an acquisition unit 20, a control unit 21, a communication unit 22, a display unit 23, and a storage unit 24.

The acquisition unit 20 acquires coordinate information A1 from the coordinate information acquisition system 4. The acquisition unit 20 calculates a positional relationship between a first object and a second object which are imaged by the imaging device 3 on the basis of the acquired coordinate information A1. The acquisition unit 20 acquires the positional relationship by calculating the positional relationship. Accordingly, the acquisition unit 20 acquires the positional relationship between a first object and a second object which are imaged by the imaging device 3.

In the present embodiment, for example, the first object is a player who plays soccer, and the second object is a ball. Accordingly, the first object is a person, and the second object is a non-person.

The control unit 21 controls imaging performed by the imaging device 3. Here, the control unit 21 controls imaging performed by the imaging device 3 when the positional relationship between the first object and the second object satisfies a predetermined imaging condition. The control unit 21 controls imaging performed of at least one of the first object and the second object performed by the imaging device 3. In an example of the present embodiment, the control unit 21 controls imaging performed by each of the plurality of imaging devices 3 which are provided separately from the imaging control device 2.

In the present embodiment, the positional relationship between the first object and the second object is a distance between the first object and the second object. In the present embodiment, a positional relationship between a player and a ball is a distance between the player and the ball. The distance between a player and a ball is a distance on a pitch. That is, the distance between the first object and the second object is a distance in the space in which the first object and the second object exist. The distance in the space is a physical distance.

When the distance between the first object and the second object is equal to or less than a predetermined distance, the control unit 21 controls imaging performed by the imaging device 3. For example, a ceiling camera installed in a position at which the pitch can be imaged may calculate the positional relationship between the first object and the second object without using the coordinate information A1. When the ceiling camera calculates the positional relationship, the ceiling camera measures a distance to the first object and a distance to the second object and calculates the positional relationship using the measured distance information and information of a height at which the ceiling camera is installed.

The acquisition unit 20 and the control unit 21 are realized, for example, by causing a CPU to load a program read from a read only memory (ROM) to a random access memory (RAM) and to perform a process in accordance with the program. The ROM and the RAM are included in the storage unit 24.

The communication unit 22 transmits and receives various types of information via a wireless network. For example, the communication unit 22 transmits an imaging control signal B1 to the imaging device 3. The communication unit 22 receives a captured image C1 from the imaging device 3. The communication unit 22 includes a communication interface (I/F) for performing wireless communication.

The display unit 23 displays various types of information. The display unit 23 displays the captured image C1 acquired from the imaging device 3. A user of the imaging control system 1 can see or ascertain the captured image C1 captured by the imaging device 3 by displaying the captured image on the display unit 23. The display unit 23 includes, for example, a liquid crystal display or an organic electro-luminescence (EL) display.

The storage unit 24 stores various types of information. For example, the storage unit 24 stores a predetermined imaging condition used for the control unit 21 to control imaging performed by the imaging device 3. The storage unit 24 stores the captured image C1 acquired from the imaging device 3. The storage unit 24 is constituted, for example, by a storage device such as a magnetic hard disk device or a semiconductor storage device.

FIG. 3 is a diagram illustrating an example of a functional configuration of the imaging device 3 according to the present embodiment. The imaging device 3 includes an imaging control unit 30, a tracking unit 31, an imaging unit 32, a communication unit 33, and a storage unit 34.

The imaging control unit 30 controls the imaging unit 32. For example, the imaging control unit 30 causes the imaging unit 32 to perform panning, tilting, and zooming. The imaging control unit 30 controls an imaging direction of the imaging unit 32 such that an object imaged by the imaging unit 32 is in an angle of view. The imaging control unit 30 is remotely controlled by the imaging control device 2.

The tracking unit 31 tracks an object which is imaged by the imaging device 3. The tracking unit 31 tracks the object on the basis of coordinate information indicating coordinates in a space of the first object or the second object. The tracking unit 31 acquires coordinate information A1 as the coordinate information from the coordinate information acquisition system 4. The tracking unit 31 calculates a direction in which the tracked object is included in an angle of view of the imaging unit 32 and the angle of view on the basis of the coordinate information. The imaging control unit 30 causes the imaging unit 32 to perform panning, tilting, and zooming on the basis of the direction and the angle of view calculated by the tracking unit 31.

The imaging unit 32 captures an image of an object under the control of the imaging control unit 30. The image is referred to as a captured image C1. The imaging unit 32 includes an optical system and an imaging device. The optical system includes mechanisms for panning, tilting, and zooming.

In the present embodiment, the captured image C1 is a still image. The imaging unit 32 consecutively captures a plurality of still images in a period from start of imaging and end of the imaging under the control of the imaging control unit 30. In other words, the imaging unit 32 consecutively captures a still image. The speed of consecutive imaging may range, for example, from 1 frame to 2 frames per second. The speed of consecutive imaging may be higher than 1 frame to 2 frames per second. The image captured by the imaging unit 32 may be a moving image.

The communication unit 33 transmits and receives various types of information via a wireless network. For example, the communication unit 33 receives an imaging control signal B1 from the imaging control device 2. The communication unit 33 transmits the captured image C1 to the imaging control device 2. The communication unit 33 receives the coordinate information A1 from the coordinate information acquisition system 4. The communication unit 33 includes a communication interface (I/F) for wireless communication.

The storage unit 34 stores various types of information. The storage unit 34 stores, for example, the captured image C1. The storage unit 24 is constituted, for example, by a memory card.

As described above, the coordinate information A1 supplied from the coordinate information acquisition system 4 is also used for the acquisition unit 20 provided in the imaging control device 2 to acquire the positional relationship between the first object and the second object. Accordingly, the imaging device 3 tracks an object on the basis of the coordinate information A1 indicating coordinates in the space of the first object or the second object, and the acquisition unit 20 acquires the positional relationship between the first object and the second object on the basis of the coordinates of the first object and the coordinates of the second object indicated by the coordinate information A1 used to track an object.

When the imaging device 3 acquires the coordinate information A1 as described above, the imaging device 3 may additionally calculate the positional relationship between the first object and the second object using the acquired coordinate information A1. In this case, the acquisition unit 20 acquires the positional relationship between the first object and the second object calculated by the imaging device 3.

The imaging control system 1 may include a system acquiring coordinate information used for the tracking unit 31 to perform tracking separately from the coordinate information acquisition system 4. The tracking unit 31 may perform tracking on the basis of image recognition instead of using the coordinate information.

The tracking unit 31 may track a ball instead of a player. As described above, the imaging device 3 has a function of tracking the first object or the second object. The control unit 21 provided in the imaging control device 2 controls imaging performed by the imaging device 3 having the tracking function.

The imaging device 3 may not have the function of tracking the first object or the second object. In this case, the tracking unit 31 is omitted from the configuration of the imaging device 3.

After images have been captured at a wide angle, a zoomed image of a player of interest may be generated through digital zooming. In this case, the player of interest has only to be in the angle of view in tracking.

### [Imaging condition]

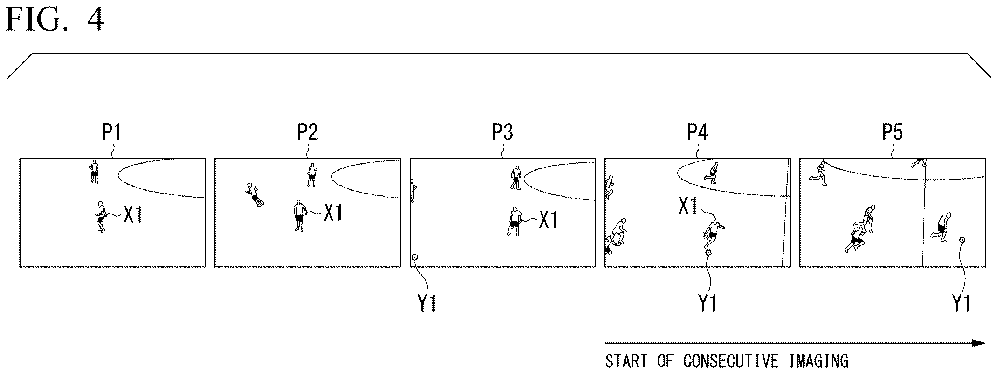

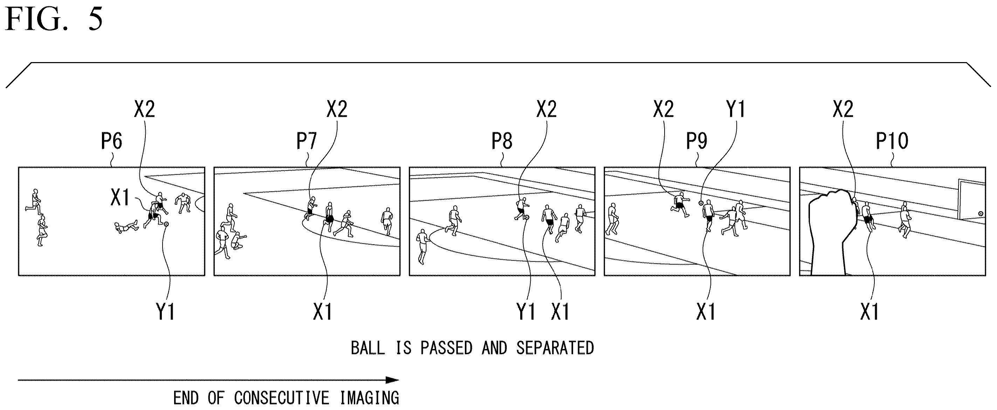

Imaging conditions used for the imaging control device 2 to control imaging performed by the imaging device 3 will be described below. FIGS. 4 and 5 are diagrams illustrating an example of the imaging conditions according to the present embodiment. As described above, in the present embodiment, the control unit 21 provided in the imaging control device 2 controls imaging performed by the imaging device 3 when a distance between the player and the ball is equal to or less than a predetermined distance. The control of imaging performed by the imaging device 3 is start of imaging or end of imaging. Equal to or less than the predetermined distance is, for example, equal to or less than 5 meters.

10 images including images P1 to P10 illustrated in FIGS. 4 to 5 are images in which scenes of a soccer game in the angle of view of the imaging device 3 are arranged in a time series. A player tracked by the imaging device 3 out of a plurality of players appearing in the images is a player of interest X1. In the images P1 and P2, a distance between the player of interest X1 and a ball Y1 is large, and the ball Y1 does not appear. In the image P3, the ball Y1 is included in the angle of view, but the distance between the player of interest X1 and the ball Y1 is not equal to or less than the predetermined distance.

In the image P4, a scene in which the ball Y1 is passed to the player of interest X1 and immediately before the player of interest X1 starts a dribble is captured. In the image P4, the distance between the player of interest X1 and the ball Y1 is equal to or less than the predetermined distance. Since the positional relationship between the player of interest X1 and the ball Y1 satisfies the imaging conditions, the control unit 21 provided in the imaging control device 2 causes the imaging device 3 to start consecutive imaging.

In the images P5 and P6, a scene in which the player of interest X1 is performing a dribble is captured. In the images P5 and P6, the distance between the player of interest X1 and the ball Y1 is equal to or less than the predetermined distance.

In the image P7, a scene in which the player of interest X1 passes the ball to another player X2 and immediately after the ball Y1 has been separated from the player of interest X1 is captured. In the image P7, the distance between the player of interest X1 and the ball Y1 is not equal to or less than a predetermined distance. During consecutive imaging, the imaging condition is that the distance between the player of interest X1 and the ball Y1 is equal to or less than the predetermined distance. When the distance between the player of interest X1 and the ball Y1 is not equal to or less than the predetermined distance, the control unit 21 ends consecutive imaging performed by the imaging device 3.

In the image P8, a scene in which another player X2 to which the player of interest X1 has passed the ball Y1 holds the ball Y1 appears. In the images P9 and P10, a scene in which the other player X2 kicks the ball Y1 and makes a shot appears. In the images P8, P9, and P10, the distance between the player of interest X1 and the ball Y1 is not equal to or less than the predetermined distance.

With the aforementioned imaging condition, a timing at which consecutive imaging is performed by the imaging device 3 is controlled by the imaging control device 2. Only a scene in which the distance between the player of interest X1 and the ball Y1 is equal to or less than the predetermined distance is consecutively imaged. Accordingly, only a specific scene in which the player of interest X1 holds the ball Y1 and makes a play is consecutively imaged as a still image. As described above, the player of interest X1 is a subject to be tracked by the imaging device 3.

The imaging condition at the time of start of imaging and the imaging condition at the time of end of imaging may be different. For example, the imaging condition at the time of start of imaging is that the distance between a player and a ball is equal to or less than 3 meters. The imaging condition at the time of end of imaging is that the distance between the player and the ball is equal to or greater than 10 meters. For example, an expression of a player after the player has been separated from the ball can be imaged by setting the imaging condition at the time of end of imaging to be longer than the imaging condition at the time of start of imaging.

After imaging has been started, even when the distance between the player of interest X1 and the ball Y1 is not equal to or less than the predetermined distance, the control unit 21 does not end consecutive imaging performed by the imaging device 3, but continues to perform imaging for several seconds. The several seconds is, for example, 5 seconds. By continuing to perform imaging for several seconds, consecutive imaging is continuously performed, for example, even when a situation in which the player of interest X1 strongly kicks the ball Y1 at the time of a dribble or the like and the distance between the player of interest X1 and the ball Y1 is not equal to or less than the predetermined distance occurs temporarily, then the player of interest X1 catches up the ball Y1, and the distance between the player of interest X1 and the ball Y1 becomes equal to or less than the predetermined distance again. Accordingly, it is possible to image a scene of interest without interruption.

### [Control flow in imaging control system 1]

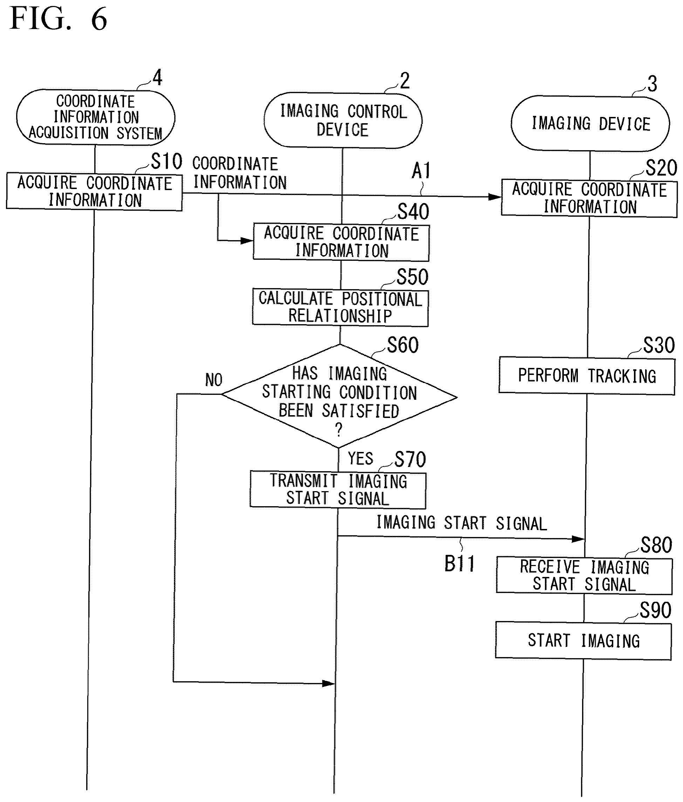

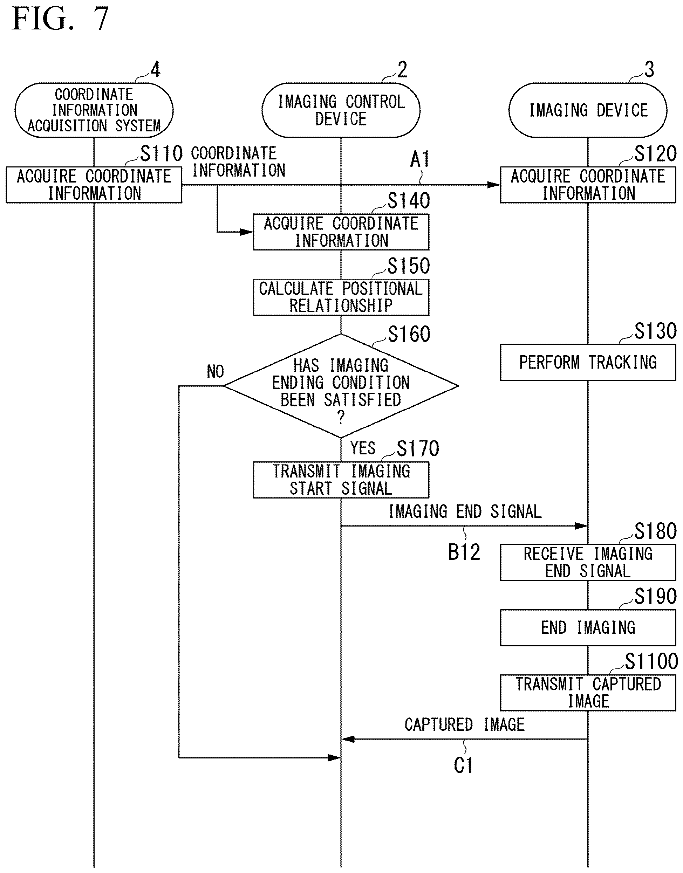

A control flow that is performed by the imaging control system 1 will be described below with reference to FIGS. 6 and 7. FIG. 6 is a diagram illustrating an example of a control flow that is performed by the imaging control system 1 at the time of start of imaging according to the present embodiment. Control at the time of start of imaging illustrated in FIG. 6 is repeatedly performed while the imaging control system 1 is operating.

Step S10: The coordinate information acquisition system 4 acquires coordinate information A1. The coordinate information acquisition system 4 images a plurality of players and a ball using a plurality of cameras. The coordinate information acquisition system 4 acquires the coordinate information A1 by recognizing the players and the ball through image recognition and calculating the coordinate information A1.

The coordinate information acquisition system 4 transmits the acquired coordinate information A1 to the imaging control device 2 and an imaging device 3.

Step S20: The imaging device 3 acquires the coordinate information A1 transmitted from the coordinate information acquisition system 4. Here, the tracking unit 31 acquires the coordinate information A1.

Step S30: The imaging device 3 performs tracking on the basis of the coordinate information A1. The tracking unit 31 calculates a direction in which a tracked player enters an angle of view of the imaging unit 32 on the basis of the coordinate information A1. The imaging control unit 30 controls an imaging direction of the imaging unit 32 on the basis of the direction calculated by the tracking unit 31.

Step S40: The imaging control device 2 acquires the coordinate information A1 transmitted from the coordinate information acquisition system 4. Here, the acquisition unit 20 acquires the coordinate information A1.

Step S50: The acquisition unit 20 calculates a positional relationship between a first object and a second object on the basis of the acquired coordinate information A1. The acquisition unit 20 calculates a distance between a player and a ball as the positional relationship between the first object and the second object.

Step S60: The control unit 21 determines whether the positional relationship calculated by the acquisition unit 20 satisfies an imaging starting condition. For example, when the distance between a player and a ball is equal to or less than the predetermined distance, the control unit 21 determines that the positional relationship satisfies the imaging starting condition.

When it is determined that the positional relationship calculated by the acquisition unit 20 satisfies the predetermined imaging starting condition (Step S60: YES), the control unit 21 performs the process of Step S70. On the other hand, when it is determined that the positional relationship calculated by the acquisition unit 20 does satisfy the predetermined imaging starting condition (Step S60: NO), the control unit 21 ends the control flow.

Step S70: The control unit 21 transmits an imaging start signal B11 to the imaging device 3. The imaging start signal B11 is a signal for causing the imaging device 3 to start imaging. The imaging start signal B11 is an example of the imaging control signal B1.

Step S80: The imaging device 3 receives the imaging start signal B11 from the imaging control device 2. Here, the imaging control unit 30 receives the imaging start signal B11.

Step S90: The imaging device 3 starts imaging. Here, the imaging control unit 30 causes the imaging unit 32 to start imaging on the basis of the received imaging start signal B11. The imaging unit 32 continues to perform consecutive imaging when imaging is started. The imaging direction of the imaging unit 32 is controlled on the basis of the direction calculated by the tracking unit 31. The imaging control unit 30 stores the images captured by the imaging unit 32 as captured images C1 in the storage unit 34.

In this way, the imaging control system 1 ends the control at the time of start of imaging.

FIG. 7 is a diagram illustrating an example of a control flow that is performed by the imaging control system 1 at the time of end of imaging according to the present embodiment. The control at the time of end of imaging illustrated in FIG. 7 is performed subsequently to Step S90 when imaging is started by the imaging device 3 in the control flow at the time of start of imaging illustrated in FIG. 6.

The processes of Steps S110, S120, S130, S140, and S150 are the same as the processes of Steps S10, S20, S30, S40, and S50 illustrated in FIG. 6, and thus description thereof will be omitted.

Step S160: The control unit 21 determines whether the positional relationship calculated by the acquisition unit 20 satisfies an imaging ending condition. When the distance between the player and the ball is not equal to or less than the predetermined distance, the control unit 21 determines that the positional relationship satisfies the imaging ending condition.

When it is determined that the positional relationship calculated by the acquisition unit 20 satisfies the predetermined imaging ending condition (Step S160: YES), the control unit 21 performs the process of Step S170. On the other hand, when it is determined that the positional relationship calculated by the acquisition unit 20 does not satisfy the predetermined imaging ending condition (Step S160: NO), the control unit 21 ends the control flow.

Step S170: The control unit 21 transmits an imaging end signal B12 to the imaging device 3. The imaging end signal B12 is a signal for causing the imaging device 3 to end imaging. The imaging end signal B12 is an example of the imaging control signal B1.

Step S180: The imaging device 3 receives the imaging end signal B12 from the imaging control device 2. Here, the imaging control unit 30 receives the imaging end signal B12.

Step S190: The imaging device 3 ends imaging. Here, the imaging control unit 30 causes the imaging unit 32 to end imaging on the basis of the received imaging end signal B12.

Step S1100: The imaging device 3 transmits a captured image C1 to the imaging control device 2. Here, the imaging control unit 30 reads the captured image C1 from the storage unit 34. The imaging control unit 30 transmits the read captured image C1 to the imaging control device 2. The captured image C1 is a plurality of still images captured through consecutive imaging from start to end of imaging.

In this way, the imaging control system 1 ends the control at the time of end of imaging.

As described above, the control at the time of start of imaging illustrated in FIG. 6 is repeatedly performed when the imaging control system 1 is operating. The control at the time of end of imaging illustrated in FIG. 7 is performed subsequently to Step S90 when imaging is started by the imaging device 3 in the control at the time of start of imaging which is repeatedly performed.

In the present embodiment, when the positional relationship between the first object and the second object satisfies a predetermined imaging condition, the control unit 21 controls imaging performed by the imaging device 3, but the present invention is not limited thereto. When at least one of a position in a space of an object, a moving speed of the object, an acceleration of the object, and a moving direction of the object for at least one of the first object and the second object satisfies a predetermined imaging condition, the control unit 21 may control imaging performed by the imaging device 3.

For example, the imaging condition may be that a position of a player of interest or a position of a ball is close to a goal (for example, inside of a penalty area).

In a counterattack scene, a rapid change of the moving direction of the player of interest such as a quick dribble or energetic movement in an attacking direction is conceivable. Here, the attacking direction is a direction toward the goal of an opponent team of the player of interest. The imaging condition includes conditions that a moving speed or acceleration of the player of interest is equal to or greater than a predetermined value and the moving direction of the player of interest is the attacking direction. For example, in a counterattack scene, a player in the opponent team may make a long pass. The imaging condition may be that a moving speed of the ball is equal to or greater than a predetermined speed, the position of the player of interest is closer to the opponent team with respect to the centerline, and the moving speed of the player of interest is equal to or less than a predetermined speed.

The imaging condition may be set on the basis of at least one of a position in a space of an object, a moving speed of the object, an acceleration of the object, and a moving direction of the object for at least one of the first object and the second object. For example, the imaging condition may be set such that imaging is performed when the position of the player of interest is located in the vicinity of the centerline and the positional relationship is equal to or less 1 meter and when the position of the player of interest is located in the vicinity of the goal and the positional relationship is equal to or less than 5 meters. In the vicinity of a goal, which receives more attention in a soccer game, imaging of the player of interest is started before the player of interest approaches a ball, and thus the timing at which imaging of an interesting (exciting) scene is started can be advanced.

The imaging condition may be set on the basis of both the distance between the first object and the second object and at least one of a position in the space of an object, a moving speed of the object, an acceleration of the object, and a moving direction of the object for at least one of the first object and the second object. The imaging condition may be set on the basis of at least one of a position in a space of an object, a moving speed of the object, an acceleration of the object, and a moving direction of the object for at least one of the first object and the second object instead of the distance between the first object and the second object.

### (Modified examples)

In the present embodiment, the positional relationship between the first object and the second object is used as the imaging condition, but the present invention is not limited thereto. In a modified example of the present embodiment, it is assumed that positional relationships between three or more objects are used as the imaging condition.

In the present modified example, the acquisition unit 20 acquires the positional relationships between three or more objects including the first object and the second object. For example, the acquisition unit 20 acquires positional relationship between a first object, a second object, and a third object. The first object is a player who is a striker. The second object is a ball. The third object is a goalkeeper.

The imaging condition is, for example, that a distance between the striker and the ball is equal to or less than a predetermined distance, a distance between the striker and the goalkeeper is equal to or less than a predetermined distance, and a distance between the goalkeeper and the ball is equal to or less than a predetermined distance.

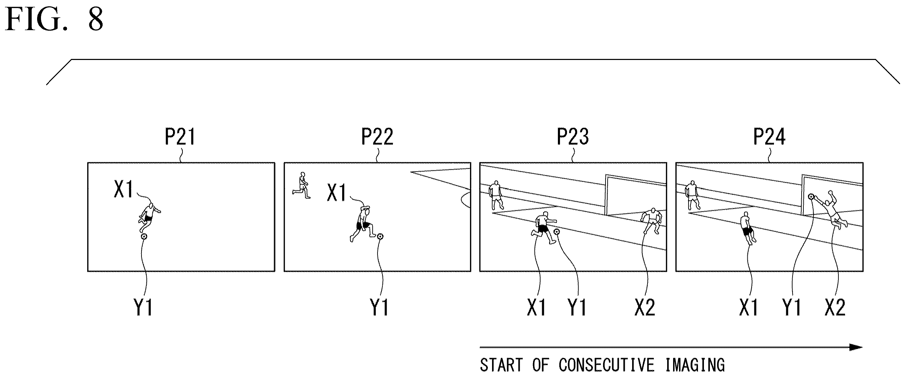

FIG. 8 is a diagram illustrating another example of an imaging condition according to the present modified example. Four images including images P21 to P24 in FIG. 8 are images in which scenes of a soccer game in the angle of view of the imaging device 3 are arranged in a time series. A player who is tracked by the imaging device 3 out of a plurality of players appearing in the images is the player of interest X1. The player of interest X1 is a striker.

In the images P21 and P22, the player of interest X1 is performing a dribble toward the goal. The distance between the player of interest X1 and the ball Y1 is equal to or less than a predetermined distance. On the other hand, the distance between the player X2 who is a goalkeeper and the ball Y1 is not equal to or less than the predetermined distance, and the distance between a player X2 and the player of interest X1 is not equal to or less than a predetermined distance. Accordingly, imaging is not started yet.

In the image P23, the player of interest X1 is going to make a shot in the vicinity of the goal in which the player X2 is located. The distance between the player of interest X1 and the ball Y1 is equal to or less than the predetermined distance. The distance between the player X2 and the ball Y1 is equal to or less than the predetermined distance. The distance between the player X2 and the player of interest X1 is equal to or less than the predetermined distance. Since the positional relationships between the player of interest X1, the ball Y1, and the player X2 satisfy the imaging condition, the control unit 21 provided in the imaging control device 2 causes the imaging device 3 to start consecutive imaging.

In the image P24, the player X2 who is a goalkeeper catches the ball Y1. In the image P4, the positional relationships between the player of interest X1, the ball Y1, and the player X2 satisfy the imaging condition. Accordingly, consecutive imaging performed by the imaging device 3 does not end but is continued.

The acquisition unit 20 may acquire a positional relationship between the third object and at least one of the first object and the second object. For example, the acquisition unit 20 uses conditions that the striker (the first object) is dribbling a ball and the striker (the first object) approaches the goalkeeper (the third object) as the imaging condition, and imaging is started. In this case, the acquisition unit 20 may acquire the distance between the striker (the first object) and the ball (the second object) and the distance between the striker (the first object) the goalkeeper (the third object). That is, the acquisition unit 20 may not acquire the distance between the goalkeeper (the third object) and the ball (the second object).

When the positional relationship between the first object and the second object satisfies a predetermined changing condition, the control unit 21 may change an object of interest from at least one of the first object and the second object to the other object.

The predetermined changing condition is, for example, that the first object and the second object are located in a predetermined range and the distance between the first object and the second object changes from equal to or less than the predetermined distance to equal to or greater than the predetermined distance.

For example, when the first object is a striker and the second object is a ball, it is assumed that the striker makes a shot in a penalty area. In this case, the distance between the striker and the ball in the penalty area changes from equal to or less than the predetermined distance to equal to or greater than the predetermined distance. Since the positional relationship between the first object and the second object satisfies the predetermined changing condition, the control unit 21 changes the first object from the striker to the goalkeeper. Accordingly, the first object is a goalkeeper, and the second object is a ball. Thereafter, the control unit 21 causes the imaging device 3 to continuously perform consecutive imaging, for example, until the distance between the goalkeeper and the ball becomes equal to or greater than the predetermined distance.

The goalkeeper may be registered as a candidate for the new first object in advance after the first object has been changed, and the registered goalkeeper may be changed to the first object when the positional relationship between the first object (the striker) and the second object (the ball) satisfies the predetermined changing condition. In the aforementioned example, even when the distance between the striker and the ball changes from equal to or less than the predetermined distance to equal to or greater than the predetermined distance, imaging may be continuously performed for a predetermined time without ending imaging immediately when the distance becomes equal to or greater than the predetermined distance. By continuously performing imaging for a predetermined time, imaging is continued while the first object is being changed from the striker to the goalkeeper, and thus it is possible to continuously perform imaging without missing a scene of interest.

Imaging performed by the imaging device 3 is controlled when the distance between the player of interest and the ball is equal to or less than the predetermined distance as in the aforementioned imaging condition. The aforementioned imaging condition in which the distance between the first object and the second object is equal to or less than the predetermined distance is also referred to as a first determination condition. With the first determination condition, it is possible to curb missing of a scene in which the player of interest is associated with the ball. However, even with the first determination condition, the scenes to be imaged may include a non-decisive scene, and an imaging time may be extended. In another example of the imaging condition, the following second determination condition may be set along with the first determination condition such as only more decisive scenes can be imaged.

For example, the second determination condition is a condition in which a position in a space in which an object exists for at least one of the first object and the second object is a specific position. In this case, the second determination condition is, for example, a condition in which at least one of the player of interest and the ball is in the penalty area. When this imaging condition is satisfied, the control unit 21 controls imaging performed by the imaging device 3, and thus the likelihood that only a shot scene will be imaged is increased.

For example, the second determination condition is a condition in which a moving speed of an object is equal to or higher than a predetermined speed in a predetermined direction. In this case, the second determination condition is, for example, a condition in which the moving direction of the ball is an attacking direction of the player of interest and the moving speed of the ball is equal to or higher than a predetermined speed. When the second determination condition is satisfied, the control unit 21 controls imaging performed by the imaging device 3, and thus the likelihood that only a scene of a counterattack or a dribble will be imaged is increased.

The second determination condition may be a condition in which the moving direction of the ball is an attacking direction of the player of interest and the acceleration of the ball is equal to or higher than a predetermined acceleration.

By performing imaging on the basis of the second determination condition along with the first determination condition, it is possible to image only more decisive scenes. Only the first determination condition (in which the distance between the player of interest and the ball is equal to or less than the predetermined distance) is set as the imaging condition, flag information may be added to a captured image C1, and a specific scene may be extracted from the captured image C1 on the basis of the flag information in an operation of replaying and ascertaining the captured image C1. Flag information is, for example, information indicating an imaged scene. The imaged scene includes, for example, scenes such as "inside of a penalty area" or a "dribble scene." By combining the first determination condition and the flag information, it is possible to reduce a risk of imaging miss and to perform filtering at a timing after imaging.

The flag information is recorded on at least one of images captured by the imaging device 3 by the control unit 21. The flag information may be an imaging condition, attributes of the first object and the second object, an imaging start time or an imaging end time, or the like in addition to an imaged scene. The imaging condition is an imaging starting condition or an imaging ending condition based on the distance between the player and the ball. The attributes of the first object and the second object include, for example, uniform numbers of players.

Accordingly, the control unit 21 records at least one of the imaging condition, the attributes of the first object and the second object, the imaging start time or the imaging end time, and the imaged scene on at least one of images captured by the imaging device 3. By extracting a specific scene, it is possible to appropriately extract data in which a desired scene is imaged from a large amount of imaging data or to display the data at a time.

As described above, the control unit 21 starts imaging using the imaging device 3 when the positional relationship between the first object and the second object acquired by the acquisition unit 20 satisfies a first imaging condition (the imaging starting condition) as the imaging condition and ends imaging using the imaging device 3 when the positional relationship satisfies a second imaging condition (the imaging ending condition) as the imaging condition after imaging has been started. The timing at which imaging ends may be extended for a predetermined time as follows.

For example, even when a ball is separated from the player of interest, the imaging condition for ending imaging is satisfied, and the player of interest or the ball is located near the goal (for example, inside of the penalty area), imaging may be continued for several seconds instead of ending the imaging immediately. By continuing imaging for several seconds, it is possible to reliably image tense competition for a ball near the goal.

For example, it is assumed that a ball is separated from a player of interest and then the ball moves toward the goal. In this case, even when the imaging condition for ending imaging in which the distance between the player of interest and the ball is equal to or greater than the predetermined distance is satisfied, imaging is continued for several seconds instead of ending the imaging immediately. The several seconds is, for example, 5 seconds. It is possible to reliably image a scene until a goal is allowed after a shot or after a goal has been allowed.

Accordingly, when the positional relationship between the first object and the second object satisfies the second imaging condition and at least one of a position in a space of an object, a moving speed of the object, an acceleration of the object, and a moving direction of the object for at least one of the first object and the second object satisfies a predetermined condition, the control unit 21 delays the timing at which imaging performed by the imaging device 3 ends for a predetermined time.

As described above, the imaging control device 2 according to the present embodiment includes the acquisition unit 20 and the control unit 21.

The acquisition unit 20 acquires the positional relationship between the first object and the second object which are imaged by the imaging device 3.

The control unit 21 controls imaging performed by the imaging device 3.

When the positional relationship between the first object and the second object acquired by the acquisition unit 20 satisfies a predetermined imaging condition, the control unit 21 controls imaging performed by the imaging device 3.

In ball game such as the soccer, it is preferable that a still image or a moving image of a goal scene or a shot scene be captured, but when to perform imaging depends on a cameraman in the related art, which causes a large load. Missing of a desired scene is likely to occur.

With the imaging control device 2 according to the present embodiment having this configuration, since imaging performed by the imaging device 3 is controlled when the positional relationship between the first object and the second object satisfies the predetermined imaging condition, it is possible to curb missing of imaging of a desired scene.

The imaging control device 2 or the imaging control system 1 is suitably used to image sports scenes of a sport such as soccer. The desired scene is, for example, a scene in which a player of interest is associated with the ball. In a scene in which a player is associated with a ball, for example, the ball and the player along with a goal scene, a shot scene, a dribble, or a pass appear in the angle of view. Accordingly, in the present embodiment, an imaging condition in which the distance between the player of interest and the ball is equal to or less than the predetermined distance is set as the imaging condition.

When the imaging control system 1 includes a plurality of imaging devices 3 as in the present embodiment, it is possible to automatically acquire a still image or a moving image of a desired scene at various angles and to curb missing of the desired scene.

One or more imaging devices 3 have to be provided in the imaging control system 1. The number of imaging devices 3 may be one, two, three, or five or the like. The imaging devices 3 may be provided by the number of objects to be imaged. For example, the imaging devices 3 may be provided by the number of players of interest. When the number of imaging devices 3 is smaller than the number of players of interest as in the present embodiment, the player of interest to be tracked and imaged may be changed in the middle.

In the present embodiment, a specific player of interest is imaged by a plurality of imaging devices 3, but the present invention is not limited thereto. Different players of interest may be set for the imaging devices. In this case, the imaging condition is determined for each imaging device, and the imaging control signal B1 is transmitted from the imaging control device 2 to the imaging devices 3 at different timings.

### (Second embodiment)

A second embodiment of the present invention will be described below in detail with reference to the drawings.

In the present embodiment, it is assumed that an imaging device has a pre-capturing function. In the pre-capturing function, imaging is started at a timing before a release instruction is received, imaged data is temporarily stored, and imaging data including the temporarily stored data is stored in a storage unit when the release instruction is received. With the pre-capturing function, data imaged at a timing before the release instruction is received can be included in the imaging data. In the following description, imaging in which the imaging data is stored is also referred to as fully-pushed imaging for the purpose of discrimination from pre-capturing in which imaged data is temporarily stored.

The imaging control system according to the present embodiment is referred to as an imaging control system 1a.

The same constituents as in the first embodiment will be referred to by the same reference signs, and description of the same constituents and operations may be omitted.

The imaging control system 1a includes an imaging control device 2a, a plurality of imaging devices 3a, and a coordinate information acquisition system 4. The imaging control system 1a according to the present embodiment is different from the imaging control system 1 (FIG. 1) according to the first embodiment in the imaging control device 2a and the plurality of imaging devices 3a. The plurality of imaging devices 3a have a pre-capturing function.

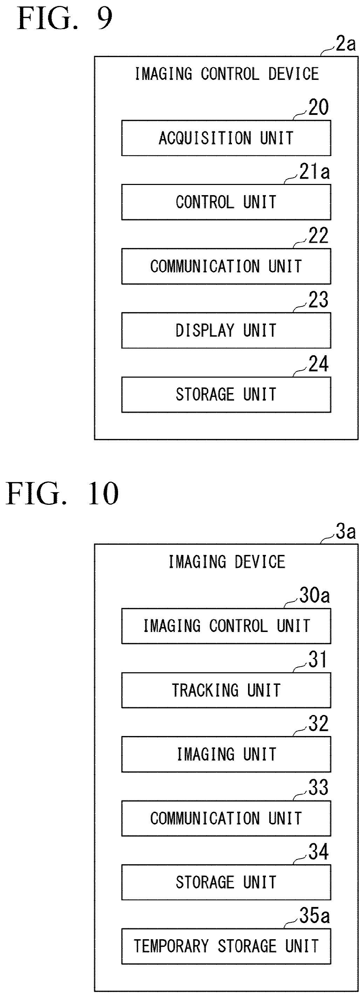

FIG. 9 is a diagram illustrating an example of a functional configuration of the imaging control system 1a according to the present embodiment. The imaging control device 2a includes an acquisition unit 20, a control unit 21a, a communication unit 22, a display unit 23, and a storage unit 24. The imaging control device 2a (FIG. 9) according to the present embodiment is different from the imaging control device 2 (FIG. 2) according to the first embodiment in the control unit 21a. Here, the functions of the other constituents (the acquisition unit 20, the communication unit 22, the display unit 23, and the storage unit 24) are the same as in the first embodiment.

The control unit 21a controls imaging performed by the imaging devices 3a having a pre-capturing function. The control unit 21a controls fully-pushed imaging performed by the imaging devices 3a and pre-capturing performed by the imaging devices 3a.

FIG. 10 is a diagram illustrating an example of a functional configuration of an imaging device 3a according to the present embodiment. The imaging device 3a includes an imaging control unit 30a, a tracking unit 31, an imaging unit 32, a communication unit 33, a storage unit 34, and a temporary storage unit 35a. The imaging device 3a (FIG. 10) according to the present embodiment is different from the imaging device 3 (FIG. 3) according to the first embodiment in the imaging control unit 30a and the temporary storage unit 35a. Here, the functions of the other constituents (the tracking unit 31, the imaging unit 32, the communication unit 33, and the storage unit 34) are the same as in the first embodiment.

The imaging control unit 30a controls the imaging unit 32. The imaging control unit 30a has a pre-capturing function of starting imaging before a timing at which an imaging control signal for controlling imaging which is output from the control unit 21a is received. In the following description, the imaging control signal is also referred to as a fully-pushed imaging start signal. The imaging control unit 30a stores images captured by the imaging unit 32 before the fully-pushed imaging start signal is received in the temporary storage unit 35a and stores the images stored in the temporary storage unit 35a in the storage unit 34 after the fully-pushed imaging start signal has been received. The temporary storage unit 35a is an example of a first storage unit. The storage unit 34 is an example of a second storage unit.

The temporary storage unit 35a stores images captured by the imaging unit 32 before the fully-pushed imaging start signal is received. The temporary storage unit 35a is constituted, for example, using a storage device such as a volatile semiconductor storage device.

### [Control flow in imaging control system 1a]

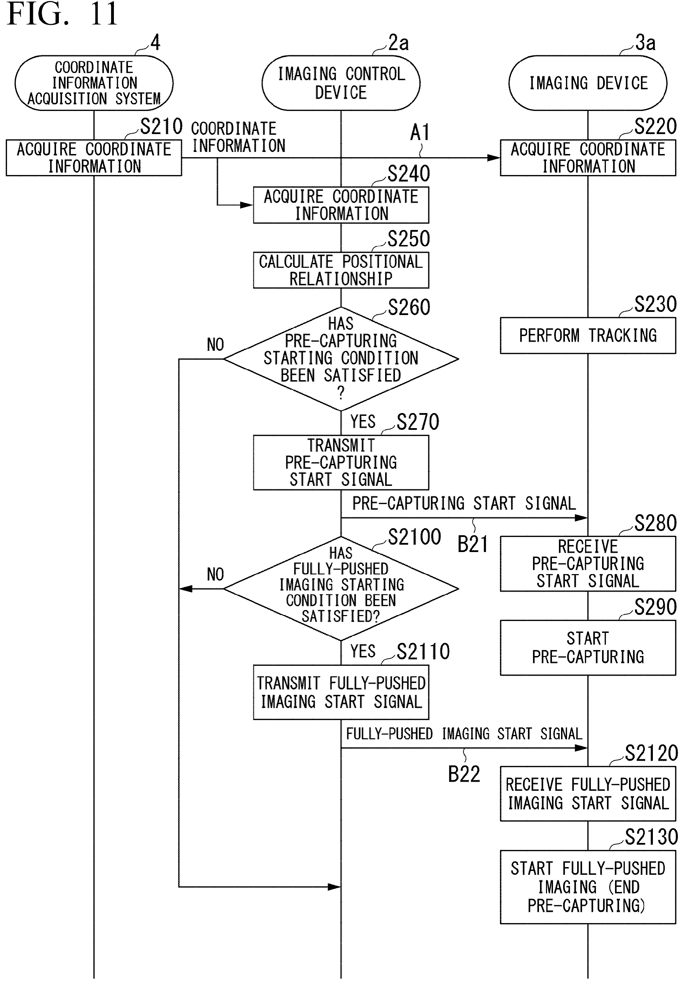

A control flow that is performed by the imaging control system 1a will be described below with reference to FIG. 11. FIG. 11 is a diagram illustrating an example of a control flow that is performed by the imaging control system 1a at the time of start of imaging according to the present embodiment. Control at the time of start of imaging illustrated in FIG. 11 is repeatedly performed while the imaging control system 1a is operating.

The processes of Steps S210, S220, S230, S240, and S250 are the same as the processes of Steps S10, S20, S30, S40, and S50 illustrated in FIG. 6, and thus description thereof will be omitted.

Step S260: The control unit 21a determines whether the positional relationship calculated by the acquisition unit 20 satisfies a pre-capturing starting condition. For example, when the distance between the player and the ball is equal to or less than a predetermined distance, the control unit 21a determines that the positional relationship satisfies the pre-capturing starting condition. Here, equal to or less than the predetermined distance is, for example, equal to or less than 5 meters. The pre-capturing starting condition is an example of an imaging condition.

When it is determined that the positional relationship calculated by the acquisition unit 20 satisfies the pre-capturing starting condition (Step S260: YES), the control unit 21a performs the process of Step S270. On the other hand, when it is determined that the positional relationship calculated by the acquisition unit 20 does not satisfy the pre-capturing starting condition (Step S260: NO), the control unit 21a ends the control flow.

Step S270: The control unit 21a transmits a pre-capturing start signal B21 to the imaging device 3a. The pre-capturing start signal B21 is a signal for causing the imaging device 3a to start pre-capturing. The pre-capturing start signal B21 is an example of the imaging control signal B1.

Step S280: The imaging device 3a receives the pre-capturing start signal B21 from the imaging control device 2a. Here, the imaging control unit 30a receives the pre-capturing start signal B21.

Step S290: The imaging control unit 30a causes the imaging unit 32 to start pre-capturing on the basis of the received pre-capturing start signal B21. The imaging unit 32 continues to perform consecutive imaging when pre-capturing is started. The imaging control unit 30a stores images captured by the imaging unit 32 in the temporary storage unit 35a. In pre-capturing, when the images stored in the temporary storage unit 35a becomes equal to or greater than a predetermined amount of data, the images stored in the temporary storage unit 35a are deleted from the oldest, and newly captured images are stored in the temporary storage unit 35a.

Step S2100: The control unit 21a determines whether the positional relationship calculated by the acquisition unit 20 satisfies a fully-pushed imaging starting condition. For example, when the distance between a player and a ball is equal to or less than a predetermined distance, the control unit 21a determines that the positional relationship satisfies the fully-pushed imaging starting condition. Here, equal to or less than the predetermined distance is, for example, equal to or less than 1 meter. The fully-pushed imaging starting condition is an example of an imaging condition.

When it is determined that the positional relationship calculated by the acquisition unit 20 satisfies the fully-pushed imaging starting condition (Step S2100: YES), the control unit 21a performs the process of Step S2110. On the other hand, when it is determined that the positional relationship calculated by the acquisition unit 20 does not satisfy the fully-pushed imaging starting condition (Step S2100: NO), the control unit 21a ends the control flow.

Step S2110: The control unit 21a transmits a fully-pushed imaging start signal B22 to the imaging devices 3. The fully-pushed imaging start signal B22 is a signal for causing the imaging devices 3a to start fully-pushed imaging. The fully-pushed imaging start signal B22 is an example of the imaging control signal B1.

Step S2120: The imaging device 3a receives the fully-pushed imaging start signal B22 from the imaging control device 2a. Here, the imaging control unit 30a receives the fully-pushed imaging start signal B22.

Step S2130: The imaging device 3a starts fully-pushed imaging. Here, the imaging control unit 30a causes the imaging unit 32 to end pre-capturing and transfers images stored in the temporary storage unit 35a in the storage unit 34 before the imaging unit 32 is caused to start fully-pushed imaging. Thereafter, the imaging control unit 30a causes the imaging unit 32 to start fully-pushed imaging on the basis of the received fully-pushed imaging start signal B22. Transfer of the images stored in the temporary storage unit 35a to the storage unit 34 and start of fully-pushed imaging using the imaging unit 32 may be simultaneously performed.

The imaging unit 32 continues to perform consecutive imaging when imaging is started. The imaging control unit 30a stores images captured by the imaging unit 32 in the storage unit 34. Accordingly, when fully-pushed imaging is started, the images captured through pre-capturing before fully-pushed imaging is started and the images captured after fully-pushed imaging has been started are stored in the storage unit 34.

In this way, the imaging control system 1a ends control at the time of start of imaging.

Control at the time of end of imaging in the imaging control system 1a is the same as the control at the time of end of imaging (FIG. 7) in the imaging control system 1 according to the first embodiment, and thus description thereof is omitted.

As described above, it is determined that the pre-capturing starting condition is satisfied when the distance between a player and a ball is equal to or less than, for example, 5 meters, and it is determined that the positional relationship satisfies the fully-pushed imaging starting condition when the distance is equal to or less than, for example, 1 meter. That is, the relative position between the player and the ball varies between the fully-pushed imaging starting condition and the pre-capturing starting condition.

Accordingly, in the present embodiment, the imaging condition includes a first condition and a second condition between which the relative position between the first object and the second object is different. The control unit 21a outputs a first imaging control signal for performing a preliminary imaging operation (pre-capturing) to the imaging device 3a when the positional relationship between the first object and the second object satisfies the first condition and outputs a second imaging control signal for performing an imaging operation to the imaging device 3a when the positional relationship satisfies the second condition. The pre-capturing starting condition is an example of the first condition. The fully-pushed imaging starting condition is an example of the second condition. The pre-capturing start signal B21 is an example of the first imaging control signal. The fully-pushed imaging start signal B22 is an example of the second imaging control signal.

### (Modified examples)

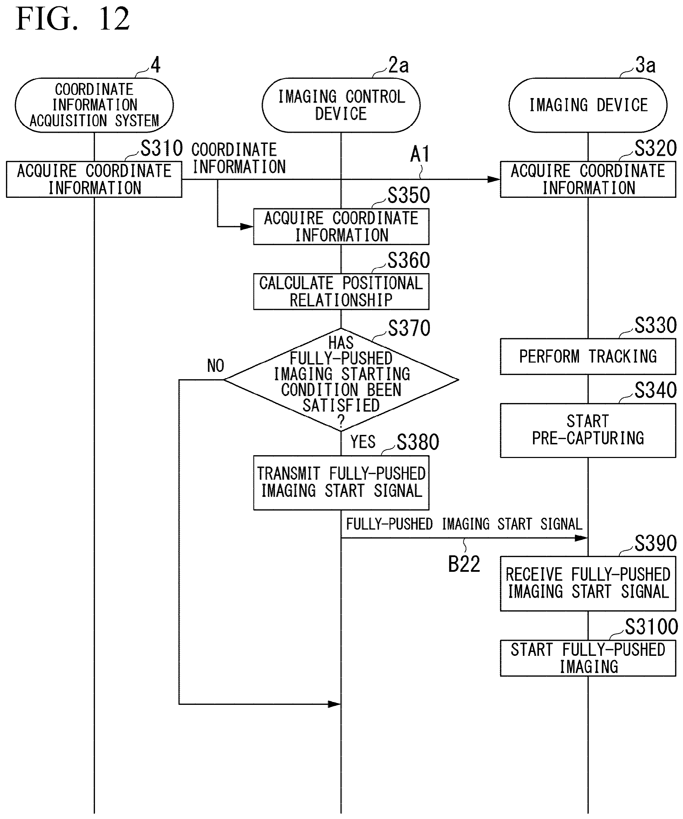

Another example of the control at the time of start of imaging in the imaging control system 1a will be described below as a modified example of the present embodiment. FIG. 12 is a diagram illustrating another example of the control flow that is performed at the time of start of imaging by the imaging control system 1a according to the modified example of the present embodiment. The control at the time of start of imaging illustrated in FIG. 12 is repeatedly performed while the imaging control system 1a is operating.

The processes of Steps S310, S320, S330, S350, S360, S380, S390, and S3100 are the same as the processes of Steps S210, S220, S230, S240, S250, S2110, S2120, and S2130 illustrated in FIG. 11, and thus description thereof will be omitted.

Step S340: The imaging control unit 30a causes the imaging unit 32 to start pre-capturing. The imaging unit 32 continues to perform consecutive imaging when pre-capturing is started. The imaging control unit 30a stores images captured by the imaging unit 32 in the temporary storage unit 35a.

In the present modified example, the imaging control unit 30a causes the imaging unit 32 to start pre-capturing when tracking is performed. Accordingly, the imaging control unit 30a causes the imaging unit 32 to start pre-capturing without receiving the pre-capturing start signal B21 from the imaging control device 2a.

Step S370: The control unit 21a determines whether the positional relationship calculated by the acquisition unit 20 satisfies the fully-pushed imaging starting condition. For example, when the distance between the player and the ball is equal to or less than the predetermined distance, the control unit 21 determines that the positional relationship satisfies the fully-pushed imaging starting condition.

When it is determined that the positional relationship calculated by the acquisition unit 20 satisfies the fully-pushed imaging starting condition (Step S370: YES), the control unit 21a performs the process of Step S380. On the other hand, when it is determined that the positional relationship calculated by the acquisition unit 20 does not satisfy the fully-pushed imaging starting condition (Step S370: NO), the control unit 21a ends the control flow.

In this way, the imaging control system 1a ends the control at the time of start of imaging. In the present modified example, the control at the time of end of imaging in the imaging control system 1a is the same as the control at the time of end of imaging (FIG. 7) in the imaging control system 1 according to the first embodiment, and thus description thereof is omitted.

As described above, the imaging device 3a has the pre-capturing function, but the control unit 21a may control imaging performed by the imaging device 3a without causing the imaging device 3a to use the pre-capturing function. When the pre-capturing function is not used, the control at the time of start of imaging and the control at the time of end of imaging that are performed by the imaging control system 1a are the same as the control at the time of start of imaging and the control at the time of end of imaging that are performed by the imaging control system 1.

Here, when the positional relationship between the first object and the second object satisfies the predetermined imaging condition and imaging performed by the imaging device is controlled, the timing of start of imaging may be delayed from a desired timing. When the imaging device 3a has the pre-capturing function, the pre-capturing function and the function of controlling imaging performed by the imaging device when the positional relationship between the first object and the second object satisfies the predetermined imaging condition can be used together. With the imaging control device 2a, even when the timing of start of imaging is delayed from a desired timing, it is possible to curb missing of the desired timing because images captured by the pre-capturing function are included in the captured images.

In the aforementioned embodiments, the distance between the first object and the second object is calculated on the basis of coordinates indicating the positions of the first object and the second object indicated by the coordinate information A1 by the acquisition unit 20, but the present invention is not limited thereto. The acquisition unit 20 may acquire the distance in a space in which the first object and the second object exist on the basis of the coordinates of the first object and the second object in images captured by the imaging devices 3 or 3a. For example, the acquisition unit 20 calculates the coordinates of the first object and the second object in the images from the captured images on the basis of settings such as panning, tilting, and zooming when the images have been captured. The acquisition unit 20 calculates a distance in the space in which the first object and the second object exist on the basis of the calculated coordinates.

In the aforementioned embodiments, the distance between the first object and the second object is a distance in the space in which the first object and the second object exist, but the present invention is not limited thereto. The distance between the first object and the second object may be a distance between areas in the images captured by the imaging devices 3 or 3a.

In this case, for example, the control unit 21 or 21a determines that the positional relationship between a player of interest and a ball satisfies the imaging condition when the distance between an area of the player of interest and an area of the ball in the images captured by the imaging devices 3 or 3a is equal to or less than the predetermined distance. Accordingly, when the player of interest and the ball are located at far positions on the pitch and the distance between the area of the player of interest and the area of the ball in the images is small, it is determined that the positional relationship between the player of interest and the ball satisfies the imaging condition. The control unit 21 or 21a uses image recognition to calculate the distance between the areas in the images captured by the imaging device 3 or 3a.

In the aforementioned embodiments, the positional relationship between the first object and the second object is calculated on the basis of the coordinate information A1 acquired from the coordinate information acquisition system 4 by the acquisition unit 20, but the present invention is not limited thereto. The positional relationship between the first object and the second object may be calculated by the coordinate information acquisition system 4. In this case, the coordinate information includes information indicating coordinates and information indicating the positional relationship between the first object and the second object. The acquisition unit 20 acquires the positional relationship by acquiring the positional relationship included in the coordinate information output from the coordinate information acquisition system 4.

In the aforementioned embodiment, the imaging devices 3 or 3a have a tracking function, but the present invention is not limited thereto. The imaging devices 3 or 3a does not have to have the tracking function. When the imaging devices 3 or 3a do not have the tracking function, for example, the imaging condition in which a player of interest is tracked and imaged on the basis of the images captured by the imaging devices 3 or 3a is calculated through image recognition by the imaging control device 2 or 2a. The imaging devices 3 or 3a track the player of interest on the basis of the imaging condition designated by the imaging control device 2 or 2a.

In the aforementioned embodiments, the imaging devices 3 or 3a consecutively capture a still image, but the present invention is not limited thereto. The image captured by the imaging devices 3 or 3a may be a moving image. The imaging condition when a moving image is captured is the same as the imaging condition when a still image is consecutively captured. Imaging is started when the distance between the player of interest and the ball is equal to or less than the predetermined distance, and imaging is ended when the distance becomes equal to or greater than the predetermined distance. As a result, the captured image is recorded as a moving image for a short time.

In the aforementioned embodiments, a soccer game is imaged by the imaging control system 1 or 1a, but the present invention is not limited thereto. The imaging control system 1 or 1a may be used to image scenes of sports other than the soccer, events, or the like. In this case, the imaging condition is set according to a scene to be imaged. The imaging control system 1 or 1a can be applied to a competitive game such as car racing in addition to sports scenes.

A part of the imaging control device 2 or 2a according to the aforementioned embodiments, for example, the acquisition unit 20 and the control unit 21 or 21a, may be realized by a computer. In this case, this control function may be realized by recording a program for realizing the control function on a computer-readable recording medium and causing a computer system to read and execute the programs recorded on the recording medium. The "computer system" mentioned herein is a computer system into which the imaging control device 2 or 2a is incorporated and includes an OS or hardware such as peripherals. The "computer-readable recording medium" is a portable medium such as a flexible disk, a magneto-optical disc, a ROM, or a CD-ROM or a storage device such as a hard disk incorporated into a computer system. The "computer-readable recording medium" may also include a medium that dynamically holds a program for a short time such as a communication line when the program is transmitted via a network such as the Internet or a communication line such as a telephone line or a medium that holds a program for a predetermined time such as a volatile memory in a computer system serving as a server or a client in that case. The program may be a program for realizing some of the aforementioned functions or may be a program for realizing the aforementioned functions in combination with another program stored in advance in the computer system.

Some or all of the functions of the imaging control device 2 or 2a according to the embodiments may be realized as an integrated circuit such as a large scale integration (LSI) circuit. The functional blocks of the imaging control device 2 or 2a may be individually formed as processors, or some or all thereof may be integrated as a processor. The integration technique is not limited to LSI, and the functions may be realized by a dedicated circuit or a general-purpose processor. When integration technology replacing LSI appears with development of semiconductor technology, an integrated circuit based on the technology may be used.

While embodiments of the present invention have been described above with reference to the drawings, any specific configurations are not limited to the embodiments, and design modifications and the like can be added thereto without departing from the gist of the present invention.

### REFERENCE SIGNS LIST

1, 1a Imaging control system
2, 2a Imaging control device
3, 3a Imaging device
20 Acquisition unit
21, 21a Control unit

## Claims

1. An imaging control device comprising:
an acquisition unit configured to acquire a positional relationship between a first object and a second object; and
a control unit configured to control imaging of at least one of the first object and the second object that is performed by an imaging device,
wherein the control unit controls imaging performed by the imaging device when the positional relationship acquired by the acquisition unit satisfies a predetermined imaging condition.

2. The imaging control device according to claim 1, wherein the control unit controls imaging performed by each of a plurality of imaging devices which are provided separately from the imaging control device.

3. The imaging control device according to claim 1, wherein the first object is a person and the second object is a non-person.

4. The imaging control device according to claim 1, wherein the positional relationship is a distance between the first object and the second object, and
wherein the control unit controls imaging performed by the imaging device when the distance between the first object and the second object is equal to or less than a predetermined distance.

5. The imaging control device according to claim 4, wherein the distance between the first object and the second object is a distance between areas in an image which is captured by the imaging device.

6. The imaging control device according to claim 4, wherein the distance between the first object and the second object is a distance in a space in which the first object and the second object exist.

7. The imaging control device according to claim 6, wherein the acquisition unit acquires a distance in the space in which the first object and the second object exist on the basis of coordinates of the first object and the second object in an image captured by the imaging device.

8. The imaging control device according to claim 1, wherein the control unit controls imaging performed by the imaging device when at least one of a position in a space including an object, a moving speed of the object, an acceleration of the object, and a moving direction of the object which is at least one of the first object and the second object satisfies the predetermined imaging condition.

9. The imaging control device according to claim 1, wherein the acquisition unit acquires a positional relationship between a third object and at least one of the first object and the second object.

10. The imaging control device according to claim 1, wherein the acquisition unit acquires positional relationships between three or more objects including the first object and the second object.

11. The imaging control device according to claim 1, wherein an object of interest which is at least one of the first object and the second object is changed to the other object when the positional relationship between the first object and the second object satisfies a predetermined changing condition.

12. The imaging control device according to claim 1, wherein the imaging condition is set on the basis of at least one of a position in a space including an object, a moving speed of the object, an acceleration of the object, and a moving direction of the object which is at least one of the first object and the second object.

13. The imaging control device according to claim 1, wherein the control of imaging performed by the imaging device is start of imaging or end of imaging.

14. The imaging control device according to claim 13, wherein the imaging condition at the time of start of imaging and the imaging condition at the time of end of imaging are different.

15. The imaging control device according to claim 13, wherein the control unit starts imaging performed by the imaging device when the positional relationship acquired by the acquisition unit satisfies a first imaging condition which is the imaging condition and ends imaging performed by the imaging device when the positional relationship satisfies a second imaging condition which is the imaging condition after the imaging has been started.

16. The imaging control device according to claim 15, wherein the control unit does not end imaging performed by the imaging device but continues to perform the imaging even when the positional relationship satisfies the second imaging condition as the imaging condition after the imaging has been started and ends the imaging performed by the imaging device when a time in which the second imaging condition is satisfied is greater than a predetermined time.

17. The imaging control device according to claim 15, wherein the control unit extends a timing of end of the imaging performed by the imaging device by a predetermined time when the positional relationship satisfies the second imaging condition and at least one of a position in a space including the object, a moving speed of the object, an acceleration of the object, and a moving direction of the object which is at least one of the first object and the second object satisfies a predetermined condition.

18. The imaging control device according to claim 1, wherein the imaging device has a pre-capturing function of starting imaging before a timing at which an imaging control signal for controlling imaging which is output from the control unit is received, and
wherein the control unit controls imaging performed by the imaging device having the pre-capturing function.

19. The imaging control device according to claim 18, wherein the imaging device stores an image captured before the imaging control signal is received in a first storage unit and stores the image stored in the first storage unit in a second storage unit after the imaging control signal has been received.

20. The imaging control device according to claim 1, wherein the imaging condition includes a first condition and a second condition in which a relative position between the first object and the second object is different, and
wherein the control unit outputs a first imaging control signal for causing the imaging device to perform a pre-imaging operation when the positional relationship satisfies the first condition and outputs a second imaging control signal for causing the imaging device to perform an imaging operation when the positional relationship satisfies the second condition.

21. The imaging control device according to claim 1, wherein the imaging device has a function of tracking the first object or the second object, and the control unit controls imaging performed by the imaging device having the tracking function.

22. The imaging control device according to claim 21, wherein the imaging device tracks an object on the basis of coordinate information indicating coordinates in a space of the first object or the second object, and
wherein the acquisition unit acquires the positional relationship between the first object and the second object on the basis of the coordinates of the first object and the coordinates of the second object which are indicated by the coordinate information used to track an object.

23. The imaging control device according to claim 1, wherein the control unit records at least one of the imaging condition, attributes of the first object and the second object, an imaging start time or an imaging end time, and an imaged scene on at least one of images captured by the imaging device.

24. An imaging control system comprising:
the imaging control device according to any one of claims 1 to 23; and
an imaging device that is controlled by the imaging control device.

25. An imaging control method comprising:
an acquisition step of acquiring a positional relationship between a first object and a second object; and
a control step of controlling imaging of at least one of the first object and the second object that is performed by an imaging device,
wherein the control step includes controlling imaging performed by the imaging device when the positional relationship acquired in the acquisition step satisfies a predetermined imaging condition.

26. A program causing a computer to perform:
an acquisition step of acquiring a positional relationship between a first object and a second object; and
a control step of controlling imaging of at least one of the first object and the second object that is performed by an imaging device,
wherein the control step includes controlling imaging performed by the imaging device when the positional relationship acquired in the acquisition step satisfies a predetermined imaging condition.
